**Europäisches Patentamt**

**European Patent Office**

**Office européen des brevets**

(19)

Veröffentlichungsnummer: **0 456 213 A1**

## EUROPÄISCHE PATENTANMELDUNG

(21) Anmeldenummer: **91107486.2**

(22) Anmeldetag: **08.05.91**

(51) Int. Cl.⁵: **A01F 25/20**

(30) Priorität: **09.05.90 DE 4014860**

(43) Veröffentlichungstag der Anmeldung:
**13.11.91 Patentblatt 91/46**

(84) Benannte Vertragsstaaten:
**AT CH FR IT LI NL**

(71) Anmelder: **VöLK MASCHINENBAU GmbH**
**Rudolf-Diesel-Str. 5**
**W-8910 Landsberg/Lech(DE)**

(72) Erfinder: **Völk, Polykarp**
**Rudolf-Diesel-Strasse 5**
**W-8910 Landsberg/Lech(DE)**

(54) **Flachsilofräs-und Fördereinrichtung.**

(57) Es wird eine Flachsilofräs- und Fördereinrichtung für Silagegut beschrieben, die zwischen einem vertikal verschwenkbaren Rohrrahmen (8) angebracht ist und über dessen gesamte Breite eine Fräswurftrommel (1) kombiniert mit einem Wurfkanal (6) parallel zum Silostock horizontal verschiebbar angeordnet ist, sodaß beim Abfräsen des Silostocks (12) die Silage zugleich über den Wurfkanal (6) auf einen Fütterungswagen gefördert wird.

FIG.I

EP 0 456 213 A1

Die Erfindung betrifft eine Flachsilofräs- und Fördereinrichtung für Silage mit den Merkmalen des Gattungsteils des Anspruchs 1.

Es sind Flachsiloentnahmegeräte mit messerbestückten Frästrommeln die radial, vertikal als auch horizontal verschwenkbar sind, allgemein bekannt.

So ist aus der DE 27 57 921 A1 eine Siloentnahmefräse bekannt, die die Merkmale einer Braunkohlenfräse aufweist, da bei ihr ebenfalls an einem radial, vertikal und horizontal verschwenkbaren Auslegarm eine Frastrommel zugeordnet ist. Dieses Siloentnahme- und Transportgerät eignet sich ausschließlich für Kleinbetriebe, da es konstruktionsbedingt nur in der Lage ist, den unmittelbar dahinter geschalteten kleinen Transportbehälter durch die geringe Wurfleistung mit Silage zu befüllen. Außerdem hat das Gerät den Nachteil, daß durch die radiale Horizontalverschwenkung am Silostock unerwünschte gefräste Radien entstehen, sodaß durch das unsaubere Schnittbild Nachgärungen an der Silowand entstehen.

Weiterhin sind aus der DE 28 34 782 C2, der DE 29 35 388 A1 und aus der DE 29 20 346 A1 Siloentnahme- und Transportgeräte bekannt, bei denen am Ende eine vertikal verschwenkbare Frästrommel angeordnet ist und die vom Silostock abgefräste Silage auf den hinten offenen Transportwagen mit eingebautem Kratzboden fällt der dann kontinuierlich die Silage nach vorne zu den Austragswalzen fördert. Diese Siloentnahme- und Transportgeräte haben den Nachteil, daß sie mit aufwendigen teuren Mitteln zum Beladen ganz auf den Boden abgesenkt werden müssen, da die Frästrommel nur eine geringe Wurfhöhe erzielt, sodaß der Transportwagen trotz des Absenkens nur in niedriger Höhe befüllt werden kann und daher sich nur für Kleinbetriebe eignen. Ein weiterer Nachteil ist die nach hinten offene Rückwand, sodaß während des Transports starke Futterverluste auftreten. Es ist deshalb aus der GM 77 24 567 ein Fräs- und Transportwagen bekannt, bei dem die Nachteile der eben erwähnten niedrigen Befüllung ausgeschalten sind, da der Frästrommel unmittelbar ein Förderer nachgeschalten ist, sodaß Fütterungswägen und dgl. unabhängig ihrer Höhe befüllt werden können.

Weiterhin ist der Förderkanal mit Frästrommel auf einem bogenförmigen Schienenpaar des Vorratswagens radial, horizontal u. vertikal schwenkbar angeordnet. Diese aufwendige,komplizierte Entnahme-und Hochfördereinrichtung ist äußerst störungsanfällig und weist eine geringe Betriebssicherheit auf, da die Fördereinrichtung im Winter festfrieren kann und nur für gehäckselte Silage geeignet ist.

Weiterhin ist aus der DE 27 43 602 C3 eine fahrbare Standsilofräse bekannt, bei der eine Frässtrommel an einem vertikal verlaufenden Hubgerüst angeordnet ist, wobei die abgefräste Silage über einen Hochförderer auf den davor abgestellten Wagen gefördert wird.

Diese Standfräse hat ebenfalls einen aufwendigen, komplizierten Mechanismus und eignet sich ausschließlich für gehäckselte Mais- und Grassilage, da die Maschine konstruktionsbedingt bei längerer Grassilage völlig ausscheidet und ebenfalls in Frostperioden hinsichtlich des Hochförderers mit dem Gummiband Probleme auftreten.

Die aus Frankreich kommenden sogenannten Silokämme verfügen über ein Schild mit daran befindlichen Kammzinken. Dieses Schild weist in etwa die Breite des Fütterungswagens auf und ist an einem starken Hydraulikarm verschwenkbar angeordnet, sodaß die Silage vom Silostock mittels des Schildes abgedrückt und nach hinten in den offenen Wagen eingepreßt wird. Diese Geräte haben aber den Nachteil, daß sie eine unsaubere Silowand hinterlassen, die, bei schon geringster Erwärmung, nachgärt.

Es stellt sich daher die Aufgabe eine Flachsilofräs- und Fördereinrichtung der eingangs genannten Art zu schaffen, die die aufgeführten Nachteile vermeidet und insbesondere eine einfache, kostengünstige, betriebssichere Entnahme und Förderung jeglicher Silage gewährleistet, unabhängig jeder Silostockhöhe und der Höhe des zu befüllenden Futterwagens und dgl.

Die Lösung dieser Aufgabe wird erfindungsgemäß mit den Merkmalen des bezeichnenden Teils des Anspruchs 1 gelöst. Zwischen einem vertikal verschwenkbaren Rohrrahmen, der an einem sogenannten Fütterungswagen, Mischwagen oder Schlepperfrontlader befestigt ist, ist eine Profilwelle drehbar gelagert,die über Ketten, Winkelgetriebe und dgl. angetrieben wird. Auf dieser Profilwelle befindet sich eine relativ schmale, nur maximal ein Viertel der Profilwellenlänge entsprechende Fräswurftrommel, die mit einem Wurfkanal gekoppelt, über Kugellager eine Einheit bildet und parallel zum Silostock über Zahnstange oder Hydraulikzylinder stufenlos verschiebbar ist. Es versteht sich von selbst, daß auch ein sogenanntes T-Getriebe mit beidseitigen Fräswurftrommel-Hälften m. Wurfkanal horizontal verschiebbar angeordnet sein kann, wobei der Nachteil der ist, daß durch den mittigen Eintrieb eine Unterbrechung der Trommelfläche entsteht und somit der Silostock nicht mehr exakt abgefräst werden kann.

Weiterhin versteht sich von selbst, daß auch unmittelbar hinter der Fräswurftrommel in der selben Breite ein sogenanntes Wurfband angebracht werden kann. Die abgefräste Silage gelangt von der Fräswurftrommel direkt über ein gebogenes Leitblech auf das Wurfband und wird dann weiter auf den Wagen geschleudert. Dieses zugeschaltene Wurfband wird ebenfalls synchron mit der Fräswurftrommel parallel zum Silostock vertikal und horizontal verschwenkt, wobei die Nachteile die sind, daß durch die mechanische Förderung erhöhte Kosten und geringere Förderweiten gegeben sind.

Die Fräswurftrommel der Einrichtung weist einen großdimensionierten Durchmesser auf, der in etwa dem Doppelten ihrer Breite entspricht. Sie ist flächendeckend mit gekröpften, schneckenförmig angeordneten Messerklingen ausgerüstet und zusätzlich mit Wurfleisten, durchgehend über die gesamte Breite, versehen.

Diese Wurfleisten haben in etwa die halbe Höhe der Klingen und sind ca. 30° in Wurfrichtung nach rückwärts geneigt, wobei in Verbindung mit dem Wurfkanal die physikalische Gesetzmäßigkeit der Zentrifugalkraft sowie der Ballistik streng eingehalten wurde. Diese erfindungsgemäße Frästrommel mit Wurfkanal ergibt eine verblüffend einfache, äußerst kostengünstige und total betriebssichere, verschleißlose Flachsilofräs- und Fördereinrichtung, die es ermöglicht, Fütterungswägen, Mischwägen und dgl., unabhängig ihrer Höhe und Länge, zu befüllen.

Ein weiterer Vorteil ist der, daß die Frästrommel mit Wurfkanal auf einfachste Weise parallel zum Silostock stufenlos verschoben wird, sodaß eine optimal gerade Silowand entsteht und die gefährlichen Nachgärungen durch Mikroorganismen vermieden werden. Ein weiterer Vorteil ist der, daß durch die speziell angeordneten Wurfleisten in Verbindung mit dem Wurfkanal extreme Wurfweiten bis zu 8m und mehr erzielt werden. Diese enormen Wurfweiten ermöglichen es jetzt Fütterungswägen in einer sogenannten Sandwichlage zu befüllen, d.h., daß Lagen unterschiedlicher Futterarten über die gesamte Wagenfläche gefördert werden können,die dann über im Wagen befindliche Dosierwalzen gemischt den Tieren vorgelegt werden.

Diese vorteilhafte ertragssteigernde Fütterungsart wird heute vom Landwirt gefordert, kann aber z. Zt. nur mit sehr teuren, kraftaufwendigen Schneckenmischwägen durchgeführt werden.

Ein weiterer Vorteil ist der, daß diese einfache Flachsilofräs- und Fördereinrichtung als Standfräse ausgebildet sein kann, wobei sie in einen hydraulisch vertikal verschiebbaren Rahmen integriert wird und den davor stehenden Fütterungswagen befüllt. Sie kann natürlich auch direkt an einen Schlepperfrontlader gekoppelt werden, sodaß der Frontladerholm des Schleppers die vertikale Bewegung übernimmt und durch die enorme Wurfwirkung die abgefräste Silage über den Schlepper hinweg auf den dahinter befindlichen Fütterungswagen und dgl. gefördert werden kann.

Im folgenden wird ein Ausführungsbeispiel der Erfindung anhand von Zeichnungen näher beschrieben. Hierbei zeigt

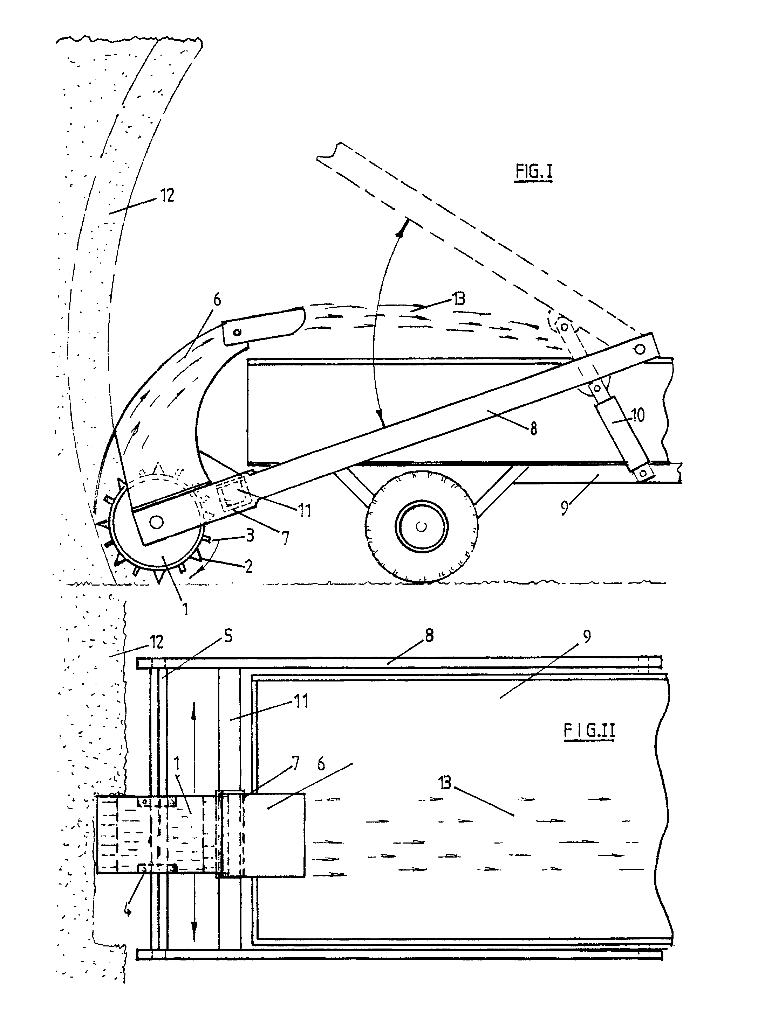

Figur 1  eine Seitenansicht der erfindungsgemäßen Flachsilofräs- und Fördereinrichtung in abgesenkter Arbeitsstellung;

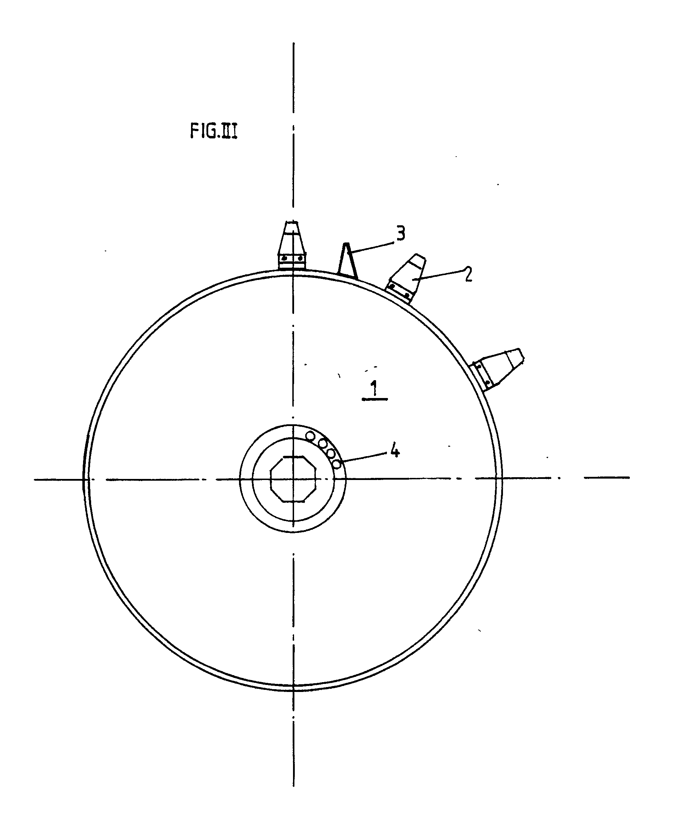

Figur 2  eine Draufsicht der erfindungsgemäßen Flachsilofräs- und Fördereinrichtung im angedeuteten zweiten Arbeitsgang;

Figur 3  eine Seitenansicht der Fräswurftrommel 1 mit Messerschneidklingen 2, Wurfleisten 3 und Kugellager 4;

Gemäß den Figuren weist die Flachsilofräs- und Fördereinrichtung eine Rohrschwinge 8 auf, die über Hydraulikzylinder 10 höhenverschwenkbar, an einem Wagen 9 in bekannter Weise zugeordnet ist und an deren Ende eine Profilwelle 5 drehbar gelagert ist, die über Ketten, Zapfwellen und dgl. (nicht näher dargestellt) angetrieben wird und auf der eine Fräswurftrommel 1 mit Wurfkanal 6, verbunden über Kugellager 4, befestigt an einem Schieberohr 7 über eine Zahnstange und dgl. (nicht näher dargestellt) auf einem Führungsrohr 11 stufenlos horizontal über die gesamte Breite verschiebbar ist. Weiterhin befinden sich auf der Fräswurftrommel 1 flächendeckend schneckenförmig angeordnete Fräsmesser 2 und durchgehende Wurfleisten 3.

Im folgenden wird die Arbeitsweise der Flachsilofräs- und Fördereinrichtung anhand der Abbildung näher erläutert:

Um ein Silostock 12 abfräsen zu können, wird die gesamte Flachsilofräs- und Fördereinrichtung mittels Hydraulikzylinder 10 über den Silostock 12 angehoben und durch Rückwärtsfahren die gewünschte Frästiefe eingestellt. Nachdem die Fräswurftrommel 1 auf volle Drehzahl gebracht ist, wird durch Absenken der Rohrschwinge 8 über die Hydraulikzylinder 10 der Fräs- und Wurfvorgang eingeleitet, wobei während des Fräsvorgangs die Silage durch die Wurfwirkung der Fräswurftrommel 1 im Wurfkanal 6 gleichzeitig auf den Wagen 9 gefördert wird.

Nach diesem ersten Arbeitsgang wird die gesamte Vorrichtung über die Hubzylinder 10 wieder über den Silostock 12 angehoben und durch horizontales Verschieben der Fräs- und Fördereinrichtung über eine Zahnstange und dgl. (nicht näher dargestellt) die gewünschte Arbeitsbreite eingestellt und wie beim ersten Arbeitsgang verfahren. Diese Arbeitsgänge werden solange wiederholt, bis der Silostock in der gesamten Arbeitsbreite zwischen der Rohrschwinge 8 von links nach rechts oder umgekehrt abgefräst ist.

**Patentansprüche**

1.  Flachsilofräs- und Fördereinrichtung für Silage mit einem Futterwagen 9, an dem ein Rohrrahmen 8 über Hydraulikzylinder 10 vertikal verschwenkbar angeordnet und an dem eine Fräs- und Fördereinrichtung zugeordnet ist,

**dadurch gekennzeichnet,**

daß eine getriebene Fräswurftrommel 1 parallel zum Silostock 12 über die gesamte Breite des Rohrrahmens 8 horizontal verschiebbar sowie vertikal verschwenkbar angeordnet ist.

2. Flachsilofräs- und Fördereinrichtung nach Anspruch 1 dadurch gekennzeichnet, daß die horizontal verschiebbare Fräswurftrommel 1 mit einem Wurfkanal 6 mittels Kugellager 4 verbunden ist.

3. Flachsilofräs- und Fördereinrichtung nach Anspruch 1 oder 2, dadurch gekennzeichnet, daß die Fräswurftrommel 1 mittels einer angetriebenen Profilwelle 5 die sich über die gesamte Rohrschwinge 8 erstreckt, angetrieben wird.

4. Flachsilofräs- und Fördereinrichtung nach einem der vorhergehenden Ansprüche, dadurch gekennzeichnet, daß die Fräswurftrommel 1 mit Wurfkanal 6 durch ein Schieberohr 7 verbunden ist und mittels Führungsrohr 11 über eine Zahnstange (nicht näher dargestellt) stufenlos horizontal verschiebbar angeordnet ist.

5. Flachsilofräs- und Fördereinrichtung nach einem der vorhergehenden Ansprüche, dadurch gekennzeichnet, daß auch ein sogenanntes T-Getriebe (nicht näher dargestellt) mit beidseitig zugeordneten Fräswurftrommelhälften und gekoppeltem Wurfkanal 6 verbunden mit dem Schieberohr 7 mittels Führungsrohr 11 horizontal verschiebbar angeordnet sein kann, wobei dann der Antrieb über Weitwinkelgelenkwelle erfolgt.

6. Flachsilofräs- und Fördereinrichtung nach einem der vorhergehenden Ansprüche, dadurch gekennzeichnet, daß die relativ schmale Fräswurftrommel 1 nur eine etwaige Breite von einem Viertel der Rohrschwinge 8 aufweist und einen großdimensionierten Durchmesser hat, der in etwa ihrer doppelten Breite entspricht.

7. Flachsilofräs- und Fördereinrichtung nach einem der vorhergehenden Ansprüche, dadurch gekennzeichnet, daß die Fräswurftrommel 1 durchgehende Wurfleisten 3 aufweist und je nach Silagegut mit Messerklingen 2 bestückt ist.

8. Flachsilofräs- und Fördereinrichtung nach einem der vorhergehenden Ansprüche dadurch gekennzeichnet, daß auch unmittelbar hinter der Frästrommel 1 ein Wurfband mit gebogenem Leitblech (nicht näher dargestellt) zugeschaltet werden kann sodaß die Silage von der Fräswurftrommel 1 über das Leitblech auf das Wurfband gelangt und dann auf den Wagen geschleudert wird.

FIG.I

FIG.II

FIG.II

3

2

1

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | DE-U-9 005 280 (VÖLK)<br>* Seite 6 - Seite 7; Abbildungen 1-3 *<br>— — — | 1-8 | A 01 F 25/20 |
| X | US-A-2 930 657 (DELZER)<br>* Spalte 2, Zeile 3 - Spalte 8, Zeile 4; Abbildungen 1-7 *<br>— — — | 1,2,4,8 | |
| X | US-A-3 121 488 (CHITTOCK)<br>* Spalte 2, Zeile 8 - Spalte 4, Zeile 65; Abbildungen 1-5 *<br>— — — | 1,4,6,8 | |
| X | FR-A-2 216 198 (CACQUEVEL)<br>* Seite 2, Zeile 11 - Seite 6; Abbildungen 1-7 *<br>— — — | 1,4,8 | |
| A | GB-A-1 197 091 (CUNNINGHAM)<br>* Seite 1, Zeile 48 - Seite 2, Zeile 126; Abbildungen 1-5 *<br>— — — | 1,4,5,6,8 | |
| A | FR-A-1 430 701 (HARDER)<br>— — — — — | | |

RECHERCHIERTE SACHGEBIETE (Int. Cl.5)

A 01 F

Der vorliegende Recherchenbericht wurde für alle Patentansprüche erstellt

| Recherchenort | Abschlußdatum der Recherche | Prüfer |
|---|---|---|
| Den Haag | 29 Juli 91 | VERMANDER R.H. |